# EUROPEAN PATENT SPECIFICATION

(11) **EP 2 898 047 B1**
(45) Date of publication and mention of the grant of the patent: **11.04.2018**
(21) Application number: 13786538.2
(22) Date of filing: 20.09.2013
(51) Int. Cl.: C09K 21/14, C08G 79/02, C08L 85/02, D01F 1/07

(54) **FLAME RETARDANT COMPOSITION, FIBERS, PROCESS OF PREPARATION AND APPLICATIONS THEREOF**
FLAMMHEMMENDE ZUSAMMENSETZUNG, FASERN, VERFAHREN ZU IHRER HERSTELLUNG UND ANWENDUNGEN DAVON
COMPOSITION IGNIFUGE, FIBRES, LEUR PROCÉDÉ DE PRÉPARATION ET LEURS APPLICATIONS

(30) Priority: 21.09.2012 IN 2960DE2012; 29.04.2013 IN 1253DE2013
(43) Date of publication of application: 29.07.2015
(73) Proprietor: Director General, Defence Research & Development Organisation, New Delhi 110 011 (IN)
(72) Inventor: SAXENA, Arvind Kumar, Kanpur 208013 (IN); NIGAM, Vineeta, Kanpur 208013 (IN); KUMAR, Sandeep, Kanpur 208013 (IN); KERKETTA, Anjlina, Kanpur 208013 (IN)
(74) Representative: Awapatent AB
(86) International application number: PCT/IN2013/000569
(87) International publication number: WO 2014/045308

(56) References cited:
- US-A- 3 455 713
- US-A- 5 762 746
- US-A1- 2004 225 041
- US-A1- 2011 086 225

## Description

### FIELD OF THE INVENTION

The present disclosure relates to a flame retardant composition consisting of a matrix and an additive. The matrix and additive is independently selected from Ultra High Molecular weight Polyethylene (UHMPE) and Polyphosphazene (PPZ) where, when the matrix is UHMPE, the additive is PPZ and when the matrix is PPZ, the additive is UHMPE. The present disclosure also relates to a process for preparation of continuous flame retardant fibers by melt spinning process, the flame retardant fibers of the present disclosure exhibit excellent flame retardant and various other improved properties. The present disclosure further relates to the use of flame retardant fibers in various applications.

### BACKGROUND OF THE INVENTION

The various spinning techniques such as gel spinning and melt spinning of flexible polymers having relatively high molecular weights has attracted much attention in the last three decades because of its utility in the production of high-performance fiber. Polyethylene, polypropylene and poly (vinyl alcohol) fibers are typical high-performance fibers that can be produced using the gel-spinning processing method. Among these gel-spun fibers, ultrahigh-molecular-weight polyethylene (UHMPE) fibers have attracted the most attention, since their strength exceeds that of carbon and aramid fibers. Also, the electrospinning of Polyphosphazene (PPZ) has attracted much attention in the last three decades because of its utility in the production of high-performance fiber.

US 8,057,897 discloses the compositions of UHMPE and HDPE which are melt spinnable. The compositions include certain quasi- spherical particles. Also disclosed is a method of melt spinning from such compositions and the melt filament fibers produced. Flow properties of the blends are characterized by capillary rheometery. US 6,599,982 discloses improved extrusion processability of non fluorinated melt processable polyethylene improved by introducing a process aid comprising atleast two unimodal fluroelastomers having different mooney viscosities.

US 4,281,070 discloses UHMPE molding powders with improved melt characteristics that can be processed with conventional melt forming equipment such as screw extruder and injection molding machines. The molding powders are comprised of from 70 to 95 weight percent UHMPE, from 5 to 30 weight percent of intermediate molecular weight polyethylene and 0.1 to 10 percent of a finely divided nucleating agent. US 4,413,110 discloses solutions of UHMPE in a relatively non volatile solvent which are extruded through an aperture and cooled to form a gel of indefinite length. Gels are stretched to form different fibers.

US 4,545,950 discloses extrusion of UHMPE with paraffin wax having a melting point of 40 deg C to 120 deg C. The molten mixture is melt extruded through a die at temperature of 180 deg C to 300 deg C. The stretched shaped articles are substantially free from stretching unevenness. US 5,474,845 discloses a high strength polyethylene fiber, which is prepared by melt spinning of polyethylene having a high density through a spinnerette, by cooling the fiber coming out from the spinnerette and by stretching the fiber obtained at 50 deg C - 150 deg C. The polyethylene used in the melt spinning is a homopolymer of ethylene having a weight average molecular weight M_{w} between 125000-175000 g/mol, polydispersity below 5 and density higher than 955 g/dm³. The stretching degree in the drawing step is at least 400%.

US 7,935,283 discloses compositions that are intimate blends of ultrahigh molecular weight polyethylene and high-density polyethylene (HDPE), which are melt spinnable. The compositions include certain quasi-spherical particles.

US patent no. 5,104,602 discloses the fibers formed from the blend of metal oxide such as titanium or zirconium oxide, with etheric phosphazene by electrospinning. The solutions are then formed into fibers and cured at room temperature or with moderate heating. The composite could also been doped with low lattice energy salts to form conductive fibers.

US patent no. 5,190,819 discloses the preparation of conductive fibers from the blend of metal oxide, etheric phosphazene and a salt. The continuous fibers formed were cured by extrusion at room temperature or with moderate heating. The invention optionally contains salt for antistatic fibers.

US patent no. 7,235,295 discloses polymeric Nanofibers which are useful in a variety of medical and other applications. Nanofibers are formed from biodegradable and non degradable polyphosphazenes and their blends with organic, inorganic/organometallic polymers and also with nanosize particles such as hydroxyapatites.

US patent application 2012/0029150 discloses a method of forming fibers from two precursors, each possessing a core and at least one functional group known to have fast reactivity are mixed. The mixed precursors are then reactively extruded under heat to cross-link during polyphosphazene fiber production

US patent no. 4,405,738 discloses polyesters polymers and copolyester polymer incorporating flame retardant amounts of cyclotri (or tetra) phosphazenes. These phosphazenes can be added at the start of ester interchange, prior to, for example polycondensation and conventional melt spinning, or if desired, after polycondensation but before melt spinning.

Saxena et. al. in Journal of Applied Polymer Science, DOI: 10.1002/app.32912,(2010), Material and Design 31, 1148-1155 (2010), J, Nanoscience & Nanotechnology, 9 (2009) 1-10, and J. renif. Plast. Comp. (2892) (2009) 15 discloses the synthesis of polyphophazene and its effect on various polymer blends.

Extensive studies have been reported by Mark, J.E., Allcock, et. al. in Inorganic Polymers, 1st Ed., Prentice-Hall, Englewood Cliffs, NJ, pg. 63, 1992; and Allcock, H. R., in Chemistry and Application of Polyphosphazenes, Wiley-Interscience, NJ, Ch.1, pg.23, 2002 on PPZ as main matrix or an additive to draw nanofiber and its effect on some specific properties but not much literature on polyphosphazene fiber is available.

Xiaoyan Zhang, et. al. in "Synthesis and Characterization of Novel Magnetic Fe3O4/polyphosphazene Nanofibers", Solid State Sciences, 11 (2009) 1861 has disclosed novel magnetic Fe₃O₄/polyphosphazene nanofibers successfully prepared via a facile approach by ultrasonic irradiation.

Jianwei Fu, et. al. in "The production of porous carbon nanofibers from cross-linked polyphosphazene nanofibers" Carbon 49 (2011) 1033-1051 has disclosed the uniform porous carbon nanofibers with an average diameter of 90 nm which are fabricated by forming polyphosphazene nanofibers and carbonizing them, without the need for any activation step.

Paolo Carampi, et. al. in "Electrospun polyphosphazene nanofibers for in vitro rat endothelial cells proliferation", Journal of Biomedical Materials Research, Part A, DOI 10.1002/jbm.a.30999; and Lakshmi S. Nair, et. al. in "Fabrication and Optimization of Methylphenoxy Substitute Polyphosphazene Nanofibers for Biomedical Applications", Biomacromolecules, 2004, 5, 2212 has disclosed that the electrospinning process allows formation of ultrathin polyphosphazene fibers for tissue engineering and biomedical applications US 2004/225041 discloses a composition comprising HDPE with an added amount of 5.5 w% of 1,1,3,3,5,5-hexa(aryloxy)cyclotriphosphazene and 3.5 w% of a sterically hindered amino flame retardant. So far, studies have been reported on the drawing of UHMPE fibers either by sol-gel techniques or melt spinning using HDPE, LDPE as other constituent, whereas, there is a need for a UHMPE fibers having good flame retardant properties and other improved properties.

Studies on the fabrication of biodegradable poly [bis(ethylalanato)phosphazene]-nano hydroxyapatite (PNEA-nHAp) composite nanofiber matrices via electrospinning shows biodegradable characteristics and found to be compatible with hydroxyapatite.

There is a need of fibers with fire retarding properties which can be used for making high performance composites and fire protection apparels and devices for defence application so that these can be used for versatile application where high temperature stability is required. So far there is no disclosure about the use of melt spinning technique to prepare polyphosphazene fibers. Most of the disclosures reported so far dealt with the preparation of Polyphosphazene fibers by electrospinning techniques and solution extruding under heat using metal oxide and hydroxyapatite etc as other constituent. Further, drawing fibers of polyphosphazene elastomer is a tough task because of its poor melt stability. Therefore, there is a need of a composition and process for preparing polyphosphazene fibers.

### SUMMARY OF THE INVENTION

An aspect of the present disclosure provides a flame retardant composition consisting of:
a matrix in the range of 88% to 97% (w/w) and an additive in the range of 3% to 12% (w/w); wherein each of the matrix and the additive is independently selected from Ultra High Molecular weight Polyethylene (UHMPE) and Polyphosphazene (PPZ) and wherein, when the matrix is UHMPE, the additive is PPZ and when the matrix is PPZ, the additive is UHMPE.

Another aspect of the present disclosure provides a flame retardant fibers comprising: a matrix in the range of 88% to 97% (w/w) and an additive in the range of 3% to 12% (w/w) wherein each of the matrix and the additive is independently selected from Ultra High Molecular weight Polyethylene (UHMPE) and Polyphosphazene (PPZ) and wherein, when the matrix is UHMPE, the additive is PPZ and when the matrix is PPZ, the additive is UHMPE.

Further an aspect of the present disclosure provides a process of melt spinning the flame retardant composition of UHMPE-PPZ to obtain flame retardant fibers.

Yet another aspect of the present disclosure provides the use of flame retardant fibers of the present disclosure in various industrial and medicinal purposes.

These and other features, aspects, and advantages of the present subject matter will become better understood with reference to the following description. This summary is provided to introduce a selection of concepts in a simplified form. This summary is not intended to identify key features or essential features of the subject matter, nor is it intended to be used to limit the scope of the subject matter.

### BRIEF DESCRIPTION OF ACCOMPANYING DRAWINGS

The above and other features, aspects, and advantages of the subject matter will be better understood with regard to the following description, and accompanying drawings where:

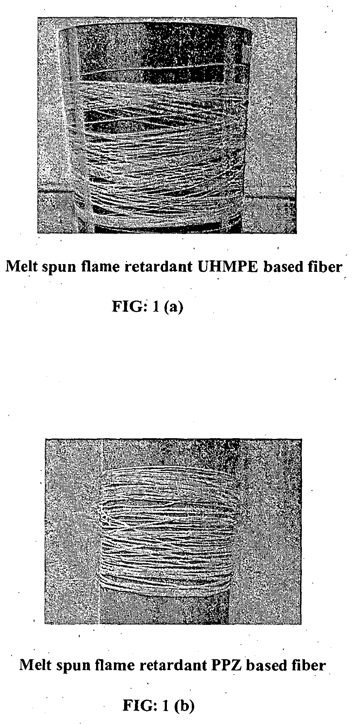

Figure 1 (a) shows the melt spun flame retardant UHMPE based fiber.
Figure 1 (b) shows melt spun flame retardant PPZ based fiber.
Figure 2 shows DSC plot of neat Polyphosphazene.
Figure 3 shows DSC plot of fire retardant composition of Polyphosphazene-Ultra High Molecular weight Polyethylene.

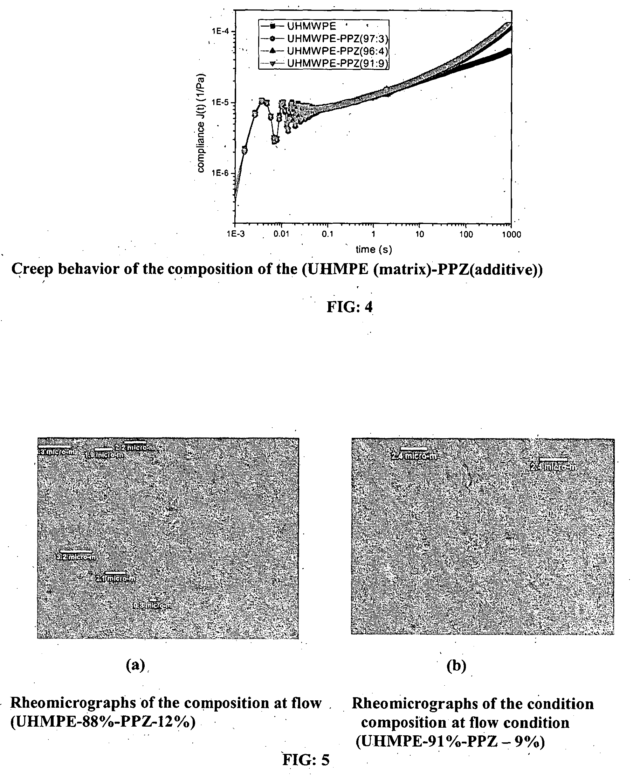

Figure 4 shows creep behavior of the composition of the present disclosure (UHMPE (matrix)-PPZ(additive)).
Figure 5 (a) shows rheomicrographs of the composition of the present disclosure at flow condition (UHMPE-88%-PPZ-12%). Figure 5 (b) shows rheomicrographs of the composition of the present disclosure at flow condition (UHMPE-91%-PPZ-9%).
Figure 6 (a) shows TGA plot of neat Polyphosphazene.
Figure 6 (b) shows TGA plot of fire retardant composition of Polyphosphazene(matrix)-Ultra High Molecular weight Polyethylene(additive).
Figure 7 shows viscosity of neat Polyphosphazene and fire retardant composition of Polyphosphazene(matrix)-Ultra High Molecular weight Polyethylene(additive).
Figure 8 shows storage modulus of neat Polyphosphazene and fire retardant composition of Polyphosphazene(matrix)-Ultra High Molecular weight Polyethylene(additive).

### DETAILED DESCRIPTION OF THE INVENTION

The present disclosure provides a flame retardant composition consisting of:
a matrix in the range of 88% to 97% (w/w) and an additive in the range of 3% to 12% (w/w) wherein each of the matrix and the additive is independently selected from Ultra High Molecular weight Polyethylene (UHMPE) and Polyphosphazene (PPZ) and wherein, when the matrix is UHMPE, the additive is PPZ and when the matrix is PPZ, the additive is UHMPE.

An embodiment of the present disclosure provides a flame retardant composition consisting of:
Ultra High Molecular weight Polyethylene (UHMPE) as the matrix and Polyphosphazene (PPZ) as the additive.

Further an embodiment of the present disclosure provides a flame retardant composition consisting of:
88% to 97% (w/w) of Ultra High Molecular weight Polyethylene (UHMPE); and 3% to 12% (w/w) of Polyphosphazene.

Another embodiment of the present disclosure provides a flame retardant composition consisting of:
91% (w/w) of Ultra High Molecular weight Polyethylene (UHMPE); and 9% (w/w) of Polyphosphazene (PPZ).

Yet another embodiment of the present disclosure provides a flame retardant composition consisting of:
Polyphosphazene (PPZ) as the matrix and Ultra High Molecular weight Polyethylene (UHMPE) as the additive.

Further an embodiment of the present disclosure provides a flame retardant composition consisting of:
88% to 97% (w/w) of Polyphosphazene (PPZ); and 3% to 12% (w/w) of Ultra High Molecular weight Polyethylene (UHMPE).

Another embodiment of the present disclosure provides a flame retardant composition consisting of:
92% (w/w) of Polyphosphazene (PPZ); and 8% (w/w) of Ultra High Molecular weight Polyethylene (UHMPE).

Yet another embodiment of the present disclosure provides a flame retardant composition consisting of:
90% (w/w) of Polyphosphazene (PPZ); and 10% (w/w) of Ultra High Molecular weight Polyethylene (UHMPE).

In an embodiment of present disclosure provides the flame retardant composition formulated in the form selected from the group consisting of extrudates, films, membranes, laminates, woven fabrics, fibers, filaments, yarns, pellets, coatings and foam.

Another embodiment of present disclosure provides the fibers comprise: a matrix in the range of 88% to 97% (w/w) and an additive in the range of 3% to 12% (w/w) wherein each of the matrix and the additive is independently selected from Ultra High Molecular weight Polyethylene (UHMPE) and Polyphosphazene (PPZ) and wherein, when the matrix is UHMPE, the additive is PPZ and when the matrix is PPZ, the additive is UHMPE.

Yet another embodiment of present disclosure provides the fibers having a physical shapes of round, circular fiber having uniform diameter, trilobal, hollow, flat oval, oval to round, triangular (round edges), dog-bone, lobular lengthwise, Y-shaped, ribbon-shaped, circular (serrated lengthwise).

The present disclosure further provides a process of preparing flame retardant fibers comprising: mixing a matrix in the range of 88% to 97% (w/w) and an additive in the range of 3% to 12% (w/w) with an organic solvent to obtain a reaction mixture; and spinning and stretching the reaction mixture in a melt spinnerette at a temperature in the range of 100 deg C to 250 deg C to obtain the flame retardant fibers; wherein each of the matrix and the additive is independently selected from Ultra High Molecular weight Polyethylene (UHMPE) and Polyphosphazene (PPZ); and wherein, when the matrix is UHMPE, the additive is PPZ and when the matrix is PPZ, the additive is UHMPE

An embodiment of the present disclosure provides a process of preparing flame retardant fibers comprising: mixing Ultra High Molecular weight Polyethylene (UHMPE) in the range of 88% to 97% (w/w) and Polyphosphazene (PPZ) in the range of 3% to 12% (w/w) with an organic solvent to obtain a reaction mixture; and spinning and stretching the reaction mixture in a melt spinnerette at a temperature in the range of 100 deg C to 250 deg C to obtain the flame retardant fibers.

Another embodiment of the present disclosure provides a process of preparing flame retardant fibers comprising: mixing 97% (w/w) of Ultra High Molecular weight Polyethylene (UHMPE) and 3% (w/w) of Polyphosphazene with an organic solvent to obtain a reaction mixture; and spinning and stretching the reaction mixture in a melt spinnerette at a temperature in the range of 130 deg C to 250 deg C to obtain the flame retardant fibers.

Yet another embodiment of the present disclosure provides a process of preparing flame retardant fibers comprising: mixing 91% (w/w) of Ultra High Molecular weight Polyethylene (UHMPE) and 9% (w/w) of Polyphosphazene with an organic solvent to obtain a reaction mixture; and spinning and stretching the reaction mixture in a melt spinnerette at a temperature in the range of 130 deg C to 250 deg C to obtain the flame retardant fibers.

In an embodiment of the present disclosure Ultra High Molecular weight Polyethylene (UHMPE) and Polyphosphazene are mixed through solution blending or by melt mixing process under inert atmosphere.

Further an embodiment of the present disclosure provides a process of preparing flame retardant fibers comprising: mixing Polyphosphazene (PPZ) in the range of 88% to 97% (w/w) and Ultra High Molecular weight Polyethylene (UHMPE) in the range of 3% to 12% (w/w) with an organic solvent to obtain a reaction mixture; and spinning and stretching the reaction mixture in a melt spinnerette at a temperature in the range of 100 deg C to 250 deg C to obtain the flame retardant fibers.

An embodiment of the present disclosure provides a process of preparing flame retardant fibers comprising: mixing 97% (w/w) of Polyphosphazene and 3% (w/w) of Ultra High Molecular weight Polyethylene (UHMPE) with an organic solvent to obtain a reaction mixture; and spinning and stretching the reaction mixture in a melt spinnerette at a temperature in the range of 100 deg C to 250 deg C to obtain the fire retardant fibers.

Another embodiment of the present disclosure provides a process of preparing flame retardant fibers comprising: mixing 92% (w/w) of Polyphosphazene and 8% (w/w) of Ultra High Molecular weight Polyethylene (UHMP) with an organic solvent to obtain a reaction mixture; and spinning and stretching the reaction mixture in a melt spinnerette at a temperature in the range of 100 deg C to 250 deg C to obtain the fire retardant fibers.

Yet another embodiment of the present disclosure provides a process of preparing flame retardant fibers comprising: mixing 90% (w/w) of Polyphosphazene and 10% (w/w) of Ultra High Molecular weight Polyethylene (UHMP) with an organic solvent to obtain a reaction mixture; and spinning and stretching the reaction mixture in a melt spinnerette at a temperature in the range of 100 deg C to 250 deg C to obtain the fire retardant fibers.

Non-limiting examples of the organic solvent used in the process of the present disclosure are decaline, THF, mineral oil, dimethylformamide, dimethylsulphoxide, dimethylacetamide, trfluoroethanol, chloroform and dichloromethane or mixtures thereof.

The non-limiting example of melt spinnerette used in melt spinning the fibers in accordance with the present disclosure is a model manufactured by Ventures and Consultancy Bradford Limited.

The fibers emerging from the spinnerette are lead through a cooling stack having a length of about 2.5 meters.

In an embodiment of the present disclosure Polyphosphazene (PPZ) and Ultra High Molecular weight Polyethylene (UHMPE) are mixed through solution blending or by melt mixing process under inert atmosphere.

In another embodiment of the present disclosure PPZ and UHMPE are mixed in a ratio in the range of 88:12 to 97:3 by weight, and the mixing is carried out by solution blending, cryogenic grinding or by melt mixing process under inert atmosphere.

The melt spinning in accordance with the present disclosure is done under varied pressure and temperature varying from about 60 deg C to 250 deg C in such a way that the polymer could be processed below the degradation temperature of polymer.

The non-limiting examples of polyphophazene (PPZ) used in accordance with the present disclosure is selected from the group consisting of saturated aliphatic, unstaurated aliphatic, aryloxy derivatives, and fluoroalkoxy derivatives or mixtures thereof. The aryloxy derivatives used in the preparation of polyphophazene are usually having carbon atoms between C₆ to C₁₂. The fluoroalkoxy derivatives are usually prepared using fluoroalcolhols having carbon atoms in the range of C₂-C₅.

Polyphosphazenes used in the present disclosure are synthesized by the thermal ring opening polymerization of hexachlorophosphonitrile trimer followed by nucleophilic substitution using appropriate organic moieties as reported by Allcock et al in J. Am. Chem. Soc. 1965, 87, 4216. A variety of copolymers of PPZ having fluroalkoxy and allylphenoxy as pendant groups are prepared and are utilized to draw the fiber adding UHMPE as additive, by properly dispersing it through solution casting. The resultant polymers are characterized and melt spun to draw the fiber.

In an embodiment of the present disclosure the flame retardant stretchable fibers can be prepared at a temperature in the range of 50 deg C to 150 deg C.

The present disclosure further provides a flame retardant fibers comprising: a matrix in the range of 88% to 97% (w/w) and an additive in the range of 3% to 12% (w/w); wherein each of the matrix and the additive is independently selected from Ultra High Molecular weight Polyethylene (UHMPE) and Polyphosphazene (PPZ) and wherein, when the matrix is UHMPE, the additive is PPZ and when the matrix is PPZ, the additive is UHMPE.

An embodiment of the present disclosure provides a flame retardant fiber comprising: Ultra High Molecular weight Polyethylene (UHMPE) in the range of 88% to 97% (w/w) and Polyphosphazene (PPZ) in the range of 3% to 12% (w/w).

Another embodiment of the present disclosure provides a flame retardant fibers comprising: 91% (w/w) of Ultra High Molecular weight Polyethylene (UHMPE); and 9% (w/w) of Polyphosphazene.

Further an embodiment of the present disclosure provides a flame retardant fibers comprising: Polyphosphazene (PPZ) in the range of 88% to 97% (w/w) and Ultra High Molecular weight Polyethylene (UHMPE) in the range of 3% to 12% (w/w).

Another embodiment of the present disclosure provides a flame retardant fibers comprising: 97% (w/w) of Polyphosphazene (PPZ); and 3% (w/w) Ultra High Molecular weight Polyethylene (UHMPE).

Yet another embodiment of the present disclosure provides a flame retardant fibers comprising: 92% (w/w) of Polyphosphazene (PPZ) ; and 8% (w/w) of Ultra High Molecular weight Polyethylene (UHMPE).

Another embodiment of the present disclosure provides a flame retardant fibers having thermal stability in the range of up to 300 deg C to up to 400 deg C.

The present disclosure further provides the use of flame retardant fibers prepared in accordance with the present disclosure for use in various industrial and medicinal purposes. The flame retardant fibers of the present disclosure has various applications, few of such applications are as follows: (a) flame retardant fibers of present disclosure can be widely used in defense equipments such as tank, armored car, cut-resistance jacket, cut-resistant gloves to impart good temperature flexibility, (b) flame retardant fibers of the present disclosure can also be used in composites field such as composites materials for aviation and spaceflight, ropes for navy vessel, fishing net, ocean cage against winds and waves, sports equipments and construction projects, (c) flame retardant fibers of the present disclosure for stand alone applications in aircraft interiors, household interiors, ship interiors, interiors of hotels, interiors of public recreation centers, interiors of any mobile system, (d) flame retardant fibers of the present disclosure are also used in making bulletproof vest, jacket, garments, helmet and plate, (e) flame retardant fibers of the present disclosure can be incorporated into existing polymeric materials to convert them from flammable to non-flammable composites.

The flame retardant fibers prepared in accordance with the present disclosure have smooth texture, good flame retardancy and improved drawability, durability and thermal stability for use in variety of industrial and medical applications.

In an embodiment the tensile strength of flame retardant fibers of the present disclosure changes with the change of molecular weight of UHMPE/PPZ taken as matrix and also by amount of PPZ/UHMPE taken as additive.

The origin of the high melt viscosity and poor processability of UHMPE/PPZ based fibers can be traced back to the entanglements of the high molecular weight polymer chains. High entanglement density imparts excellent mechanical properties in the end use application but causes restricted mobility of the polymer chains in the melt during processing. Therefore, lowering the entanglement density of UHMPE and increasing the melt stability of PPZ might results into well-processable fibers with enhanced flow characteristics and completely fused products thereof. The strategy reported in this contribution is based on preventing the polymer chains from getting entangled during solution blending and hence to create a unique nascent morphology in UHMPE. Rheological experiments proved that by using elastomeric Polyphosphazene as an additive in UHMPE matrix and by using UHMPE as an additive to PPZ matrix, it is possible to develop ultra high molecular weight polyethylene with a unique disentangled morphology and polyphosphazene with a unique morphology having sufficient melt strength and flowability to draw fibers from them. For example, 12 Phr (Parts per hundred resins) of PPZ is added to UHMPE matrix and 10 Phr (Parts per hundred resins) of UHMPE is added to PPZ matrix. Phr of the dispersant more than the above said compositions leads to the loss in the inherent properties of the main matrix. Therefore the above composition is optimum for fiber drawing in view of the future applications. The optimum entanglement density positively affects the flow and therefore, the processability of the material, as was demonstrated by compression molding sheet preparation and fiber drawing. Subsequent heating above Melting Temperature (Tm) results in gradual entangling of the polymer chains and formation of completely fused, grain boundary-free product.

The non-limiting examples of the physical shapes of fibers prepared in accordance with the present disclosure are circular fiber having uniform diameter, round, trilobal, hollow, flat oval, oval to round, triangular (round edges), dog-bone, lobular lengthwise, Y-shaped, ribbon-shaped, circular (serrated lengthwise).

General scheme for preparation of flame retardant fibers in accordance with the present disclosure:
Preparation of Dichloro Polyphosphazene Elastomer:- The thermal ring opening polymerization of hexachlorophosphonitrile trimer was carried out in an oven at 250 deg C as reported by Allcock, H. R. et. al. in Am. Chem. Soc. 1965, 87, 4216.

Preparation of Nucleophilic Substituted PPZs:- The Dichloropolyphosphazene was taken in a three necked flask containing THF in which sodium salts of trifluoroethanols, octafluoropentanol and allyl phenol were added drop wise respectively through dropping funnel under inert atmosphere and stirred for about 24 hrs. The resultant materials were poured in water to collect the elastomer and then dried in vacuum oven.

Mixing of matrix and additive: a matrix in the range of 88% to 97% (w/w) and an additive in the range of 3% to 12% (w/w) wherein each of the matrix and the additive is independently selected from Ultra High Molecular weight Polyethylene (UHMPE) and Polyphosphazene (PPZ); and wherein, when the matrix is UHMPE, the additive is PPZ and when the matrix is PPZ, the additive is UHMPE. UHMPE/PPZs matrix having trifluoroethoxy, octafluoropentoxy and allylphenoxy are mixed with PPZ /UHMPE as an additive. The matrix and additive were mixed by solution mixing. The solvents used were decaline and THF. The polymers after dissolution were thereafter mixed by cryogenic grinding and casted into a film using compression molding at 300°C.

Rotational Rheometry:- Viscosity and flow properties of the film of neat UHMPE and neat PPZ , UHMPE and PPZs compositions as prepared above were characterized by Rotational Rheometer, Model AR. G2 at room temperature (27± 2°C). In all tests, the cone and plate geometry used had a diameter of 25mm and a cone angle of 2°. A section of the film was cut into a small round piece and placed between a cone and plate geometry, where it was melted and viscosity was measured with shear rate.

Melt Spinning: Fibers of various compositions of UHMPE and PPZs were spun and stretched in the melt spinnerette manufactured by Ventures and Consultancy Bradford Limited by using a spinning temperature varying from 120 deg C to 250 deg C. The fibers emerging from the spinnerette were lead through a cooling stack having a length of 2.5m. From the cooling stack the fiber was conveyed round a reverse roll to the stretching rolls.

In another embodiment of the present disclosure the value of LOI (Limited Oxygen Index) of PPZs based fiber with the variation of reactive pendant group and quantity of additives (UHMPE) on PPZs.

In yet another embodiment of the present disclosure the value of LOI of UHMPE based fiber with the variation of reactive pendant group and quantity of additives (PPZs) on UHMPE.

### EXAMPLES

The following examples are given by way of illustration of the present disclosure and should not be construed to limit the scope of present disclosure. It is to be understood that both the foregoing general description and the following detailed description are exemplary and explanatory only and are intended to provide further explanation of the subject matter.

### Example 1

Dichloropolyphosphazene elastomer (20.0 grams, 0.055 mole) as prepared by reported method was taken in three necked flask (3.0 liters) containing of dry THF (400 ml). Sodium salts of trifluoroethanol (26.4 grams 0.264mole), octafluoropentanol (11.49 grams, 0.0495 mole), allyl phenol (2.21 grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded, was dried in vacuum oven for 4 hrs at 100 deg C, 6-7mm Hg.

The prepared PPZ was mixed with UHMPE in the UHMPE/PPZ proportion of 97/3 (w/w) by solution mixing in decaline and THF as co-solvent of UHMPE. and PPZ respectively and thereafter mixed by cryogenic grinding and casted into a film using compression molding at 300 deg C and characterized and finally the mixture was melt spun into fiber at 200°C.

### Example 2

Dichloropolyphosphazene elastomer (20.0 grams, 0.055 mole) as prepared by reported method was taken in three necked flask (3.0 liters) containing of dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in the UHMPE/PPZ proportion of 88/12 (w/w) by solution mixing in decaline and THF as co-solvent of UHMPE and PPZ respectively and thereafter mixed by cryogenic grinding and casted into a film using compression molding at 280°C and characterized and finally the mixture was melt spun into fiber at 190°C.

### Example 3

Dichloropolyphosphazene elastomer (20.0 grams, 0.055 mole) as prepared by reported method was taken in three necked flask (3.0 liters) containing of dry THF (400 ml). Sodium salts of trifluoroethanol (26.4 grams 0.264mole), octafluoropentanol (11.49 grams, 0.0495 mole), allyl phenol (2.21 grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded, was dried in vacuum oven for 4 hrs at 100 deg C, 6-7mm Hg.

The prepared PPZ was mixed with UHMPE in the UHMPE/PPZ proportion of 91/9 (w/w) by solution mixing in decaline and THF as co-solvent of UHMPE and PPZ respectively and thereafter mixed by cryogenic grinding and casted into a film using compression molding at 300 deg C and characterized and finally the mixture was melt spun into fiber at 200°C.

### Example 4

Dichloropolyphosphazene elastomer (20g) as prepared by reported method was taken in three necked flask (3 liter) containing of dry THF (400 ml). Sodium salts of Trifluoroethanol (26.4g 0.264mole), Octafluoropentanol (11.49g, 0.0495mole), Allyl phenol (2.21g, 0.0165mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole mass is poured in water to afford substituted PPZ. The PPZ thus afforded, was dried in vacuum oven for 4 hrs at 100°C, 6-7mm Hg.

The prepared PPZ was mixed with UHMPE in the PPZ/UHMPE proportion of 88/12 (w/w) was mixed with UHMPE 8 (w/w %) by solution mixing in decaline and THF as cosolvent of UHMPE and PPZ respectively and thereafter mixed by cryogenic grinding and casted into a film using compression molding at 300°C and characterized and finally the mixture was melt spun into fiber at 180°C.

### Example 5

Dichloropolyphosphazene elastomer (20g) as prepared by reported method was taken in three necked flask (3 liter) containing of dry THF (400 ml). Sodium salts of Trifluoroethanol (26.4g 0.264mole), Octafluoropentanol (11.49g, 0.0495mole), Allyl phenol (2.21g, 0.0165mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole mass is poured in water to afford substituted PPZ. The PPZ thus afforded, was dried in vacuum oven for 4 hrs at 100°C, 6-7mm Hg.

The prepared PPZ was mixed with UHMPE in the PPZ/UHMPE proportion of 97/3 (w/w) was mixed with UHMPE 8 (w/w %) by solution mixing in decaline and THF as cosolvent of UHMPE and PPZ respectively and thereafter mixed by cryogenic grinding and casted into a film using compression molding at 300°C and characterized and finally the mixture was melt spun into fiber at 180°C.

### Example 6

Dichloropolyphosphazene elastomer (20g) as prepared by reported method was taken in three necked flask (3 liter) containing of dry THF (400 ml). Sodium salts of Trifluoroethanol (26.4g 0.264mole), Octafluoropentanol (11.49g, 0.0495mole), Allyl phenol (2.21g, 0.0165mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole mass is poured in water to afford substituted PPZ. The PPZ thus afforded, was dried in vacuum oven for 4 hrs at 100°C, 6-7mm Hg.

The prepared PPZ was mixed with UHMPE in the PPZ/UHMPE proportion of 92/8 (w/w) was mixed with UHMPE 8 (w/w %) by solution mixing in decaline and THF as cosolvent of UHMPE and PPZ respectively and thereafter mixed by cryogenic grinding and casted into a film using compression molding at 300°C and characterized and finally the mixture was melt spun into fiber at 180°C.

### Example 7

Dichloropolyphosphazene elastomer (20g) as prepared by reported method was taken in three necked flask (3 liter) containing of dry THF (400 ml). Sodium salts of Trifluoroethanol (26.4g 0.264mole), Octafluoropentanol (11.49g, 0.0495mole), Allyl phenol (2.21g, 0.0165mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in the PPZ/UHMPE proportion of 90/10 (w/w) by solution mixing in decaline and THF as cosolvent of UHMPE and PPZ respectively and thereafter mixed by cryogenic grinding and casted into a film using compression molding at 280°C and characterized and finally the mixture was melt spun into fiber at 150°C.

### Example 8 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in UHMPE/PPZ proportion of 98/2 (w/w) by solution mixing in decaline and THF as co-solvent of UHMPE and PPZ respectively and thereafter mixed by cryogenic grinding. Finally this mixture was unable to be melt spun as the Phr of the dispersant PPZ was insufficient to provide flowability to the UHMPE matrix.

### Example 9 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in the UHMPE/PPZ proportion of 99/1 (w/w) by solution mixing in decaline and THF as co-solvent of UHMPE and PPZ respectively and thereafter mixed by cryogenic grinding. Finally this mixture was unable to be melt spun as the Phr of the dispersant PPZ was insufficient to provide flowability to the UHMPE matrix.

### Example 10 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in PPZ/UHMPE proportion of 98/2 (w/w) by solution mixing in decaline and THF as co-solvent of UHMPE and PPZ respectively and thereafter mixed by cryogenic grinding. Finally this mixture was unable to be melt spun as the Phr of the dispersant PPZ was insufficient to provide flowability to the PPZ matrix.

### Example 11 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in the UHMPE/PPZ proportion of 51/49 (w/w) by solution mixing in decaline and THF as co-solvent of UHMPE and PPZ respectively and thereafter mixed by cryogenic grinding and casted into a film using compression molding at 250°C and characterized and finally the mixture was melt spun into fiber at 150°C. The resulted compositions was immiscible in nature as the dispersed phase concentration was saturated and the fiber was nonuniform in its texture as well as its properties.

### Example 12 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in the UHMPE/PPZ proportion of 50/50 (w/w) by solution mixing in decaline and THF as co-solvent of UHMPE and PPZ respectively and thereafter mixed by cryogenic grinding and casted into a film using compression molding at 250°C and characterized and finally the mixture was melt spun into fiber at 150°C. The resulted compositions was immiscible in nature as the dispersed phase concentration was saturated and the fiber was nonuniform in its texture as well as its properties.

### Example 13 (comparative)

Dichloropolyphosphazene elastomer (20.0 grams, 0.055 mole) as prepared by reported method was taken in three necked flask (3.0 liters) containing dry THF (400 ml). Sodium salts of trifluoroethanol (26.4 grams 0.264 mole), octafluoropentanol (11.49 grams, 0.0495 mole), allyl phenol (2.21grams, 0.0165 mole) were prepared separately in dry THF under inert atmosphere. The prepared sodium salts of fluoroalcohols and allylphenol were added drop wise alternatively by dropping funnel in the polymer solution under inert atmosphere and stirred continuously for 24 hrs. After completion of the reaction the whole material is poured in water to afford substituted PPZ. The PPZ thus afforded was dried in vacuum oven for 4 hrs at 100°C, 6-7mm Hg.

The prepared PPZ was mixed with UHMPE in PPZ/UHMPE proportion of 51/49 (w/w) by solution mixing in decaline and THF as co-solvent of UHMPE and PPZ respectively and thereafter mixed by cryogenic grinding and casted into a film using compression molding at 250°C and characterized and finally the mixture was melt spun into fiber at 150°C. The resulted compositions was immiscible in nature as the dispersed phase concentration was saturated and the fiber was nonuniform in its texture as well as its properties.

### Example 14

### Thermal Properties of UHMPE, PPZs and their Compositions:

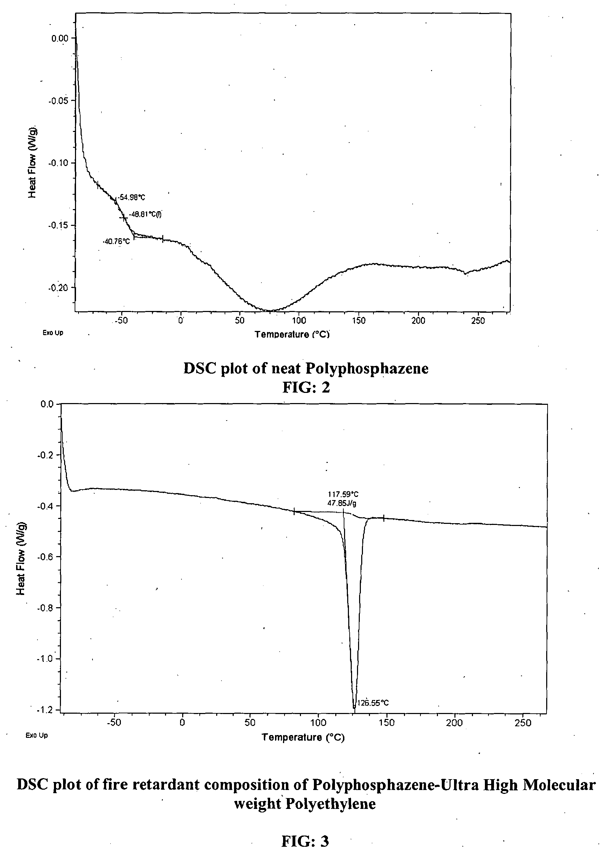

Differential scanning calorimetry (DSC) is a thermoanalytical technique in which the difference in the amount of heat required to increase the temperature of sample (3-5mg of fiber of the present disclosure) and reference is measured as a function of temperature. Both the sample and reference are maintained at nearly the same temperature throughout the experiment. Generally, the temperature program for a DSC analysis is designed such that the sample holder temperature increases linearly as a function of time. The reference sample has a well-defined heat capacity over the range of temperatures to be scanned. Differential Scanning Calorimeters (DSC) measures temperatures and heat flows associated with thermal transitions in a material. Thereby the glass transition temperature and melting temperature of flame retardant fiber are obtained. Common usage includes investigation, selection, comparison and end-use performance evaluation of materials in research, quality control and production applications. DSC results of the neat UHMPE, neat PPZ and its different compositions are shown in Table 1. The melting temperature of UHMPE changed in different compositions. After compounding UHMPE with 3 % to 12 % w/w of PPZ, only one sharp melting peak appeared in DSC thermograph which may be attributed to the formation of single phase morphology. DSC thermograph of neat PPZ and PPZ-UHMPE (92:8) composition are shown in Figure 2 and 3. The Tg of pure PPZ is ∼ 55 degree Celsius and broad melting peak was observed around 70 deg C indicating amorphous nature of PPZ. Melting initiates from 50 deg C and ends at 130 deg C. After compounding PPZ with 3-12 wt % of UHMPE as an additive, only one sharp melting peak around 117 deg C appeared in DSC thermograph which may be attributed to the formation of single phase morphology. These features suggest that PPZ and UHMPE are compatible.

The TG (Thermogravimetric) analysis of PPZ-UHMPE (92:8) showed no loss in mass from room temperature to 300 deg C, so, it may be inferred that these compositions are thermally stable up to 300 deg C. Further, the compositions of examples 1-7 showed no loss in mass from room temperature to 400 deg C, so, it may be inferred that these composition are thermally stable up to 300 deg C.. The onset of degradation of all the compositions started at about 300 deg C and ends at 500 deg C with maximum rate of degradation at 430-490 deg C. The char yield at 800 deg C was found to be 30%.

The TG analysis of neat PPZ showed weight loss starting from 200 deg C to 250 deg C owing to trapped solvent. The polymer backbone decomposition started at 300 deg C with maximum rate of decomposition at 320 deg C and ends at 382 deg C. The char yield of PPZ at 800 deg C was found to be 55% and LOI on the basis of Krevelen's equation was 29.5 % as depicted in table 1. The TG analysis of neat polymers as well as various compositions revealed consistent increase in char yield and LOI (Limited Oxygen Index) values with increase in PPZ content thereby indicating direct correlation between the char forming properties and flame retardancy. It can be concluded from the results shown in table 1 below, that the composition of examples 1-7 possess excellent flame retardant and thermal properties whereas the composition of examples 8, 9 and 10 does not posses the desired flame retardant and thermal properties. The flame retardant and thermal properties of examples 11,12 and 13 cannot be assessed due to nonuniform fiber formation or no fiber formation.

**Table 1: Flame Retardant and Thermal Properties of Fibers**

| **Compositions** | **Limited Oxygen Index (LOI)** | **Glass Transition Temperature (T_{g}(°C))** | **Melting Temperature (Tm(°C))** | **T_{f}** | **Remarks** |
|---|---|---|---|---|---|
| UHMPE(100) | 17.8 | - | 114 | 450 | Catches fire Immediately |
| PPZ(100) | 29.5 | -55 | 60 | 300 | Does not catch fire |
| **Example 1:** UHMPE(97) + PPZ (3) | 25.0 | 35.1 | 104 | 413 | Does not catch fire, melts |
| **Example 2:** UHMPE(88) + PPZ (12) | 28.0 | 25.2 | 91 | 380 | Does not catch fire, melts |
| **Example 3:** UHMPE(91) + PPZ (9) | 26.0 | 30 | 100 | 400 | Does not catch fire, melts |
| **Example 4:** PPZ (88) + UHMPE (12) | 24.0 | - | 109 | 400 | Does not catch fire, melts |
| **Example 5:** PPZ (97) + UHMPE (3) | 28.0 | - | 120 | 385 | Does not catch fire, melts |
| **Example 6:** PPZ (92) + UHMPE (8) | 26.0 | - | 117 | 400 | Does not catch fire, melts |
| **Example 7:** PPZ (90) + UHMPE (10) | 25.0 | - | 110 | 400 | Does not catch fire, melts |
| **Example 8:** UHMPE(98) + PPZ (2) | 18.5 | - | 115 | 455 | Catches fire |
| **Example 9:** UHMPE(99) + PPZ (1) | 18.0 | - | 114 | 450 | Catches fire |
| **Example 10:** PPZ (98) + UHMPE (2) | 28.0 | - | 122 | 381 | Does not catch fire |
| **Example 11:** UHMPE(51) + PPZ (49) | Immiscibility occurs which resulted in nonuniform fiber formation | | | | |
| **Example 12:** UHMPE(50) + PPZ (50) | Immiscibility occurs which resulted in nonuniform fiber formation | | | | |
| **Example 13:** PPZ (51) + UHMPE (49) | Immiscibility occurs which resulted in nonuniform fiber formation | | | | |

Where Tf is the fluid temperature of the polymer which has a direct relationship with the polymer molecular weight.

### Example 15

### Mechanical Properties of UHMPE, PPZs and their Compositions:

It is the most important single indication of strength of a fiber. The force, necessary to pull the fiber apart is determined, along with how much the fiber stretches before breaking. Tensile testing was done on a Electro pulse 1000 universal testing machine according to ASTM D-3822 cross head speed was 1 mm/min of tensile test. At least five samples were tested for each composition and results were averaged. It can be concluded from the results shown in table 2 below, that the composition of examples 1-3 possess excellent mechanical properties whereas the composition of examples 8, 9 and 10 does not posses the desired mechanical properties. The mechanical properties of examples 11,12 & 13 cannot be assessed due to nonuniform fiber formation.

**Table 2: Mechanical Properties of Fibers**

| **Compositions** | **Tensile Strength (MPa)** | **Tensile Modulus (GPa)** | **Denier** | **Diameter (cm)** |
|---|---|---|---|---|
| **Example 1:** UHMPE(97) + PPZ (3) | 401 | 15.8 | 475 | 0.040 |
| **Example 2:** UHMPE(88) + PPZ (12) | 390 | 16.0 | 468 | 0.055 |
| **Example 3:** UHMPE(91) + PPZ (9) | 391 | 16.0 | 490 | 0.050 |
| **Example 8:** UHMPE(98) + PPZ (2) | No fiber formation | | | |
| **Example 9:** UHMPE(99) + PPZ (1) | No fiber formation | | | |
| **Example 10:** PPZ (98) + UHMPE (2) | No fiber formation | | | |
| **Example 11:** UHMPE(51) + PPZ (49) | Immiscibility occurs which resulted in nonuniform fiber formation | | | |
| **Example 12:** UHMPE(50) + PPZ (50) | Immiscibility occurs which resulted in nonuniform fiber formation | | | |
| **Example 13:** PPZ (51) + UHMPE (49) | Immiscibility occurs which resulted in nonuniform fiber formation | | | |

### Example 16

### Rheological Characterization of UHMPE, PPZs and their Compositions:

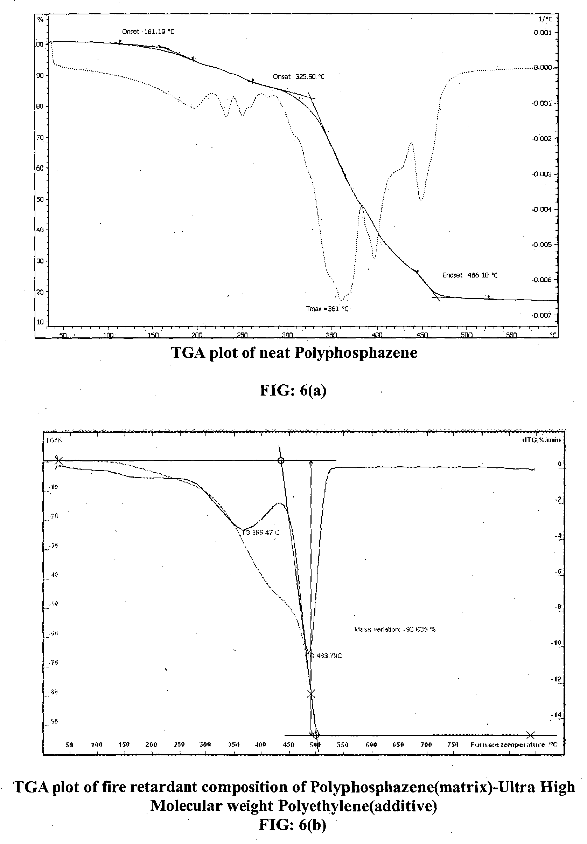

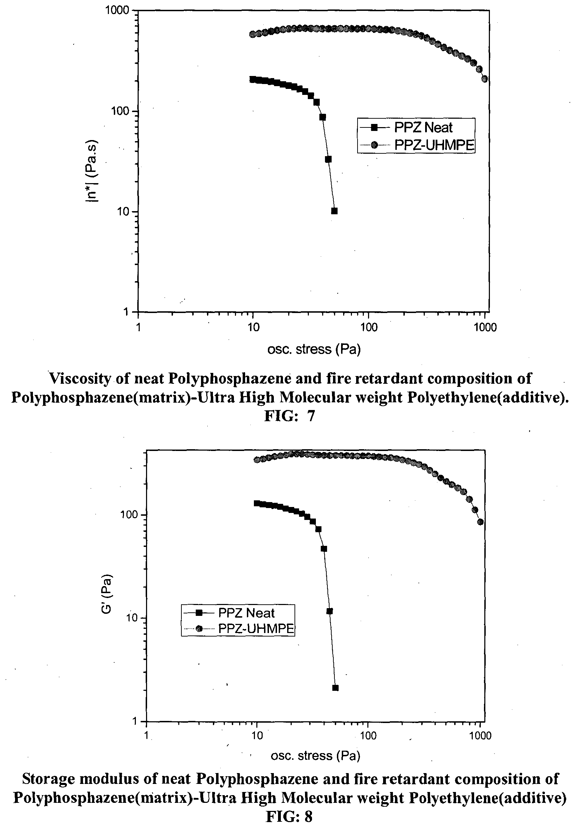

The storage modulus and viscosity of different compositions decreases with the increase in PPZ content. The storage modulus(G') of the 9% composition of PPZ as additive, however, remained about 60 GPa at 28°C, and this value is enough for the usual applications of UHMPE fibers under ambient conditions. The creep curves of neat UHMPE and UHMPE-PPZ compositions are shown in Fig. 6. Common elastic-viscous flow was absent for pure UHMPE and flow was consistent in the compositions with PPZ. As shown in Figure 6, more the PPZ content in the compositions, lower was the apparent viscosity and also lowering in disentanglement. The introduction of PPZ elastomer decreased the viscosity and improved the processability of UHMPE. UHMPE-PPZ compositions of the present disclosure exhibited improved rheological behavior. PPZ provided UHMPE with melt elastic-viscous flow, and thus it could be expected that UHMPE with PPZ could be processed via conventional process. The observations could be of both academic and industrial importance, and mainly for defence sector applications. Also, the viscosity and storage modulus of different compositions increases with the increase in UHMPE content in PPZ as shown in figure 7 and 8 respectively. The storage modulus (G') of the Neat PPZ is found to be around 100Pa, however, just by adding UHMPE to it storage modulus increases up to 700pa. This seven fold increase in the storage modulus of the composition gives melt stability to the PPZ melt and viscosity data also shows that PPZ and PPZ-UHMPE viscosity is comparable to each other at higher stresses.

### REFERENCES:

1. "Compatibilizing effect of functionalized polyphosphazene on the properties of poly(phenylene oxide)/Vectra A blend system", S. Bose, C. K. Das, A. K. Saxena, A. Ranjan, Journal of Applied Polymer Science, DOI: 10.1002/app.32912,(2010).
2. "Synthesis and effect of polyphosphazenes on the thermal, mechanical and morphological properties of poly(etherimide)/thermotropic liquid crystalline polymer blend", S. Bose , N. Pramanik , C.K. Das , A. Ranjan, A.K. Saxena, Materials and Design 31, 1148-1155 (2010).
3. "Effect of Modified MW CNT and Polyphophazene Elastomer on the Properties of PES/LCP Blend System," S. Bose, M. Mukherjee, C. K. Das & A. K. Saxena, J. Nanoscience & Nanotechnology, 9 (2009)1-10.
4. "Effect of Polyphosphazene Elastomers on The Properties of Blends of Nylon 66 and a thermotropic liquid Crystalline Polymer (Vectra A 950)", S. Bose, M.Mukherjee, T. Rath, C.K. Das, A. K. Saxena, J.Reinf. Plast.Comp..28(2) (2009) 15.
5. Allcock, H. R.; Kugel, R. L. J. Am. Chem. Soc. 1965, 87, 4216.
6. Jospeh H. Magill; "Fiber or tape forming potential of polyphosphazenes" AD-A211458, US Army Research office, University of Pittsburgh, 1989.
7. Mark, J.E., Allcock, H. R., West, R., Inorganic Polymers, 1st Ed., Prentice-Hall, Englewood Cliffs, NJ, pg. 63, 1992.
8. Allcock, H. R., Chemistry and Application of Polyphosphazenes, Wiley-Interscience, NJ, Ch.1, pg.23, 2002.
9. Xiaoyan Zhang, Qiaoyu Dai, Xiaobin Huang, Xiaozhen Tang "Synthesis and Characterization of Novel Magnetic Fe3O4/polyphosphazene Nanofibers", Solid State Sciences, 11 (2009) 1861.
10. Jianwei Fu, Zhimin Chen, Qun Xu, JiafuChen, Xiaobin Huang, Xiaozhen Tang; "The production of porous carbon nanofibers from cross-linked polyphosphazene nanofibers" CA R B O N 49 (2011) 1033 -1051
11. Paolo Carampi, Maria Teresa Conconi, Silvano Lora, Anna Michela Menti, Silvia Baiguera, Silvia Bellin, Claud io Grandi, Pier Paolo Parnigotto, "Electrospun polyphosphazene nanofibers for in vitro rat endothelial cells proliferation", Journal of Biomedical Materials Research, Part A, DOI 10.1002/jbm.a.30999.
12. Lakshmi S. Nair, Subhabrata Bhattacharya, Jared D. Bender, Yaser E. Greish, Paul W. Brown, Harry R. Allcock, and Cato T. Laurencin, "Fabrication and Optimization of Methylphenoxy Substitute Polyphosphazene Nanofibers for Biomedical Applications", Biomacromolecules, 2004, 5, 2212.
13. Bhattacharya, Subhabrata, Kumbar, Sangamesh G., Khan, Yusuf M.,Nair, Lakshmi S., Singh, Anurima, Krogman, Nick R., Brown, Paul W., Allcock, Harry R., Laurencin, Cato T., "Biodegradable Polyphosphazene-Nanohydroxyapatite Composite Nanofibers: Scaffolds for Bone Tissue Engineering", Journal of Biomedical Nanotechnology, Volume 5,Number 1, February 2009 , pp. 69-75(7)

## Claims

1. A flame retardant composition consisting of:
a matrix in the range of 88% to 97% (w/w); and
an additive in the range of 3% to 12% (w/w);
wherein each of the matrix and the additive is independently selected from Ultra High Molecular weight Polyethylene (UHMPE) and Polyphosphazene (PPZ);
and wherein, when the matrix is UHMPE, the additive is PPZ and when the matrix is PPZ, the additive is UHMPE.

2. The composition as claimed in claim 1, wherein the Ultra High Molecular weight Polyethylene (UHMPE) is 91% (w/w); and Polyphosphazene is 9 % (w/w).

3. The composition as claimed in claim 1, wherein the Polyphosphazene (PPZ) is 92 % (w/w); and Ultra High Molecular weight Polyethylene (UHMPE) is 8 % (w/w).

4. The composition as claimed in any one of claims 1-3, wherein the Polyphosphazene is selected from the group consisting of saturated aliphatic, unsaturated aliphatic, C₆ to C₁₂ aryloxy derivatives, and fluoroalkoxy derivatives or mixtures thereof.

5. The composition as claimed in claims 1-4, wherein the composition is formulated in a form selected from the group consisting of extrudates, films, membranes, laminates, woven fabrics, fibers, filaments, yarns, pellets, coatings and foam.

6. The composition as claimed in claim 5, wherein the fibers comprise:
a matrix in the range of 88% to 97% (w/w); and
an additive in the range of 3% to 12% (w/w);
wherein each of the matrix and the additive is independently selected from Ultra High Molecular weight Polyethylene (UHMPE) and Polyphosphazene (PPZ); and wherein, when the matrix is UHMPE, the additive is PPZ and when
the matrix is PPZ, the additive is UHMPE.

7. The composition as claimed in claim 5, wherein the fibers has a physical shape selected from the group consisting of round, circular fiber having uniform diameter, trilobal, hollow, flat oval, oval to round, triangular (round edges), dog-bone, lobular lengthwise, Y-shaped, ribbon-shaped and circular (serrated lengthwise).

8. A process of preparing flame retardant fibers comprising:
mixing a matrix in the range of 88% to 97% (w/w) and an additive in the range
of 3% to 12% (w/w) with an organic solvent to obtain a reaction mixture; and
spinning and stretching the reaction mixture in a melt spinnerette at temperature in the range of 130 deg C to 250 deg C to obtain the flame retardant fibers;
wherein each of the matrix and the additive is independently selected from
Ultra High Molecular weight Polyethylene (UHMPE) and Polyphosphazene (PPZ); and wherein, when the matrix is UHMPE, the additive is PPZ and when
the matrix is PPZ, the additive is UHMPE.

9. The process as claimed in claim 8, wherein the organic solvent is selected from the group consisting of decaline, THF, mineral oil, dimethylformamide, dimethylsulphoxide, dimethylacetamide, trifluoroethanol, chloroform and dichloromethane or mixtures thereof.

10. The process as claimed in claim 8, wherein the Ultra High Molecular weight Polyethylene (UHMPE) and Polyphosphazene (PPZ) are mixed through solution blending under inert atmosphere.

11. The process as claimed in claim 8, wherein the Ultra High Molecular weight Polyethylene (UHMPE) and Polyphosphazene (PPZ) are mixed by melt mixing process under inert atmosphere.

## Patentansprüche

1. Flammhemmende Zusammensetzung, bestehend aus:
einer Matrix im Bereich von 88 Gew.-% bis 97 Gew.-%; und
einem Zusatzstoff im Bereich von 3 Gew.-% bis 12 Gew.-%;
wobei sowohl die Matrix als auch der Zusatzstoff unabhängig ausgewählt sind aus Polyethylen mit ultrahohem Molekulargewicht (UHMPE) und Polyphosphazen (PPZ);
und wobei, wenn die Matrix UHMPE ist, der Zusatzstoff PPZ ist und, wenn die Matrix PPZ ist, der Zusatzstoff UHMPE ist.

2. Zusammensetzung nach Anspruch 1, wobei das Polyethylen mit ultrahohem Molekulargewicht (UHMPE) 91 Gew.-%; und Polyphosphazen 9 Gew.-% beträgt.

3. Zusammensetzung nach Anspruch 1, wobei das Polyphosphazen (PPZ) 92 Gew.-%; und das Polyethylen mit ultrahohem Molekulargewicht (UHMPE) 8 Gew.-% beträgt.

4. Zusammensetzung nach einem der Ansprüche 1 bis 3, wobei das Polyphosphazen ausgewählt ist aus der Gruppe bestehend aus gesättigten aliphatischen, ungesättigten aliphatischen C₆-C₁₂-Aryloxy-Derivaten und Fluoralkoxy-Derivaten oder Mischungen davon.

5. Zusammensetzung nach einem der Ansprüche 1 bis 4, wobei die Zusammensetzung in einer Form formuliert ist, die ausgewählt ist aus der Gruppe bestehend aus Extrakten, Filmen, Membranen, Laminaten, Geweben, Fasern, Filamenten, Garnen, Pellets, Beschichtungen und Schaumstoff.

6. Zusammensetzung nach Anspruch 5, wobei die Fasern umfassen:
eine Matrix im Bereich von 88 Gew.-% bis 97 Gew.-%; und einen Zusatzstoff im Bereich von 3 Gew.-% bis 12 Gew.-%; wobei sowohl die Matrix als auch der Zusatzstoff unabhängig ausgewählt sind aus Polyethylen mit ultrahohem Molekulargewicht (UHMPE) und Polyphosphazen (PPZ); und wobei, wenn die Matrix UHMPE ist, der Zusatzstoff PPZ ist und, wenn die Matrix PPZ ist, der Zusatzstoff UHMPE ist.

7. Zusammensetzung nach Anspruch 5, wobei die Fasern eine physikalische Form haben, die ausgewählt ist aus der Gruppe bestehend aus runden, kreisförmigen Fasern mit gleichförmigem Durchmesser, dreilappig, hohl, flach oval, oval bis rund, dreieckig (runde Kanten), Hundeknochen, längslappig, Y-förmig, bandförmig und kreisförmig (in Längsrichtung gezahnt).

8. Verfahren zur Herstellung von flammhemmenden Fasern, umfassend:
Mischen einer Matrix im Bereich von 88 Gew.-% bis 97 Gew.-%; und eines Zusatzstoffes im Bereich von 3 Gew.-% bis 12 Gew.-% mit einem organischen Lösungsmittel, um ein Reaktionsgemisch zu erhalten;
und Schleudern und Strecken des Reaktionsgemisches in einer Schmelzspinndüse bei einer Temperatur im Bereich von 130°C bis 250°C, um die flammhemmenden Fasern zu erhalten;
wobei sowohl die Matrix als auch der Zusatzstoff unabhängig ausgewählt sind aus Polyethylen mit ultrahohem Molekulargewicht (UHMPE) und Polyphosphazen (PPZ); und wobei, wenn die Matrix UHMPE ist, der Zusatzstoff PPZ ist und, wenn die Matrix PPZ ist, der Zusatzstoff UHMPE ist.

9. Verfahren nach Anspruch 8, wobei das organische Lösungsmittel ausgewählt ist aus der Gruppe bestehend aus Decalin, THF, Mineralöl, Dimethylformamid, Dimethylsulfoxid, Dimethylacetamid, Trifluorethanol, Chloroform und Dichlormethan oder Mischungen davon.

10. Verfahren nach Anspruch 8, wobei das Polyethylen mit ultrahohem Molekulargewicht (UHMPE) und das Polyphosphazen (PPZ) durch Lösungsmischen unter Inertatmosphäre gemischt werden.

11. Verfahren nach Anspruch 8, wobei das Polyethylen mit ultrahohem Molekulargewicht (UHMPE) und das Polyphosphazen (PPZ) durch Mischen in einem Schmelzmischverfahren unter Inertatmosphäre gemischt werden.

## Revendications

1. Composition ignifugeante constituée de :
une matrice dans la plage de 88 % à 97 % (m/m) ; et
un additif dans la plage de 3 % à 12 % (m/m) ;
dans laquelle chacun de la matrice et de l'additif est indépendamment choisi parmi un polyéthylène de très haut poids moléculaire (UHMPE) et un polyphosphazène (PPZ);
et dans laquelle, lorsque la matrice est UHMPE, l'additif est PPZ et lorsque la matrice est PPZ, l'additif est UHMPE.

2. Composition selon la revendication 1, dans laquelle le polyéthylène de très haut poids moléculaire (UHMPE) est à 91 % (m/m) ; et le polyphosphazène est à 9 % (m/m).

3. Composition selon la revendication 1, dans laquelle le polyphosphazène (PPZ) est à 92 % (m/m); et le polyéthylène de très haut poids moléculaire (UHMPE) est à 8 % (m/m).

4. Composition selon l'une quelconque des revendications 1 à 3, dans laquelle le polyphosphazène est choisi dans le groupe constitué d'un aliphatique saturé, d'un aliphatique insaturé, de dérivés d'aryloxy en C₆ à C₁₂ et de dérivés de fluoroalcoxy ou des mélanges de ceux-ci.

5. Composition selon les revendications 1 à 4, la composition étant formulée sous une forme choisie dans le groupe constitué d'extrudats, films, membranes, stratifiés, textiles tissés, fibres, filaments, fils, granules, revêtements et mousses.

6. Composition selon la revendication 5, dans laquelle les fibres comprennent :
une matrice dans la plage de 88 % à 97 % (m/m) ; et
un additif dans la plage de 3 % à 12 % (m/m) ;
dans laquelle chacun de la matrice et de l'additif est indépendamment choisi parmi un polyéthylène de très haut poids moléculaire (UHMPE) et un polyphosphazène (PPZ); et dans laquelle, lorsque la matrice est UHMPE, l'additif est PPZ et lorsque la matrice est PPZ, l'additif est UHMPE.

7. Composition selon la revendication 5, dans laquelle les fibres ont une forme physique choisie dans le groupe constitué d'une fibre circulaire ronde ayant un diamètre uniforme, trilobée, creuse, ovale plate, ovale à ronde, triangulaire (bords ronds), en forme d'os à chien, longitudinalement lobulaire, en forme de Y, en forme de ruban et circulaire (longitudinalement dentelé).

8. Procédé de préparation de fibres ignifuges comprenant :
le mélange d'une matrice dans la plage de 88 % à 97 % (m/m) et d'un additif dans la plage de 3 % à 12 % (m/m) avec un solvant organique pour obtenir un mélange de réaction; et
le filage et l'étirage du mélange de réaction dans une filière à l'état fondu à une température dans la plage de 130 °C à 250 °C pour obtenir les fibres ignifuges ;
dans lequel chacun de la matrice et de l'additif est indépendamment choisi parmi un polyéthylène de très haut poids moléculaire (UHMPE) et un polyphosphazène (PPZ); et dans lequel, lorsque la matrice est UHMPE, l'additif est PPZ et lorsque la matrice est PPZ, l'additif est UHMPE.

9. Procédé selon la revendication 8, dans lequel le solvant organique est choisi dans le groupe constitué de la décaline, THF, l'huile minérale, le diméthylformamide, le diméthylsulfoxyde, le diméthylacétamide, le trifluoroéthanol, le chloroforme et le dichlorométhane ou des mélanges de ceux-ci.

10. Procédé selon la revendication 8, dans lequel le polyéthylène de très haut poids moléculaire (UHMPE) et le polyphosphazène (PPZ) sont mélangés par mélange en solution sous atmosphère inerte.

11. Procédé selon la revendication 8, dans lequel le polyéthylène de très haut poids moléculaire (UHMPE) et le polyphosphazène (PPZ) sont mélangés par un procédé de mélange à l'état fondu sous atmosphère inerte.
